# NEW EUROPEAN PATENT SPECIFICATION

(11) **EP 0 772 532 B2**
(45) Date of publication and mention of the opposition decision: **01.10.2003**
(45) Mention of the grant of the patent: 26.08.1998
(21) Application number: 95921926.2
(22) Date of filing: 15.06.1995
(51) Int. Cl.: B60N 2/00, B62D 21/02

(54) **SEAT ANCHORAGE ARRANGEMENTS**
SITZVERANKERUNGSEINRICHTUNGEN
AGENCEMENTS DE FIXATION DE SIEGE

(30) Priority: 23.07.1994 GB 9414872; 25.05.1995 GB 9510646
(43) Date of publication of application: 14.05.1997
(73) Proprietor: THE MANCHESTER METROPOLITAN UNIVERSITY, Manchester M15 6BH (GB)
(72) Inventor: BRUNNING, Denzil Manchester Metropolitan Univers., Manchester M1 5GD (GB); READ, George Manchester Metropolitan University, Manchester M1 5GD (GB)
(74) Representative: Brown, Fraser Gregory James
(86) International application number: GB9501404
(87) International publication number: WO96003290

(56) References cited:
- EP-A- 0 244 371
- EP-A- 0 248 127
- EP-A- 0 284 499
- EP-A- 0 498 270
- EP-A- 0 566 528
- FR-A- 844 905
- US-A- 1 692 603
- US-A- 4 863 189
- Documents concerning the sale and public use of converted Volkswagen Kombi Minibusses manufactured by Advanced Verhicle Builders of Upper Mantle Close, Clay Cross, Derbyshire, UK

## Description

This invention relates to seat anchorage arrangements for public service vehicles and especially for minibus-type vehicles usually adapted for passenger-carrying from light goods vans.

A number of accidents, some involving school-children, have prompted calls for passenger restraint to be fitted to such vehicles, and the lap-diagonal car seat belt is the most obvious selection from those currently available. Concerns have been expressed about the effectiveness of such an arrangement. In the first place, the seating conventionally fitted in such vehicles is not adapted for such belt arrangements and anchoring points need to be provided for the belts and associated mechanism, which adds considerably to the cost involved and which may be difficult to install in a satisfactory manner because of the vehicle configuration. Secondly, however, conventional seating for this type of vehicle is of relatively flimsy construction capable of bearing the ordinary weight of a passenger in regular driving conditions, but not designed to withstand forces experienced in collisions, so that restraint in a seat which is itself collapsing is as liable to lead to injury as lack of any restraint at all.

European Patent Specification EP-A-0 566 528 discloses a framework of longerons secured to transversely extending members, said framework being adapted to be secured to the vehicle floor. This disclosure is not, however, concerned with seating and the problems of maintaining the integrity of seating within a vehicle in the event of a crash.

The present invention provides anchorage arrangements for vehicle seating that provide a ready and relatively inexpensive installation which has nonetheless inherently safer characteristics than conventional seating installations in vehicles of the minibus type.

The invention as defined in claim 1 comprises an anchorage arrangement for vehicular seating comprising a framework of longerons secured to transversely extending members said framework being secured to the vehicle floor and the longerons affording forward and rearward anchorage points for forward and rearward base member fastening points of seating, the longerons extending forwardly of the forward anchorage points of the seating.

Further features of the invention are disclosed in the dependent claims.

According to the invention, there is provided an anchorage arrangement for vehicular seating (12) which arrangement comprises:-
which overlays and is fixedly secured to the vehicle floor (16), said framework (13) having longerons (14) secured to transversely extending members (15),
a plurality of seats (12) secured to the framework (13), each seat having forward and rearward base member portions, and forward and rearward fastening points associated with each base member portion on either side of the seats,
whereby the longerons (14):
- afford forward (17) and rearward (18) anchorage points for the fastening points (19, 21) of each base member; and
- extend forwardly of the forward fastening points (17) of each seat (12).

The longerons and transverse members may be welded together. At least the longerons may be of rectangular section tube stock.

The framework may be comprised in steel or a material of like strength and rigidity.

The framework may be bolted to the vehicle floor.

The seating may have base member fastening points either side of a seat, adapted for bolting to the longerons.

The seats themselves may comprise rigid base frames designed to test when fixed to a rigid support to a 10 g head-on collision or, preferably, and to meet particular requirements, a 20 g collision. The seats and framework may be designed, constructed and assembled to test when installed in a vehicle to a 10 g head-on collision or, again, preferably, a 20 g collision.

The seats may comprise passenger restraint means, which may comprise lap diagonal seat belts secured to the seat.

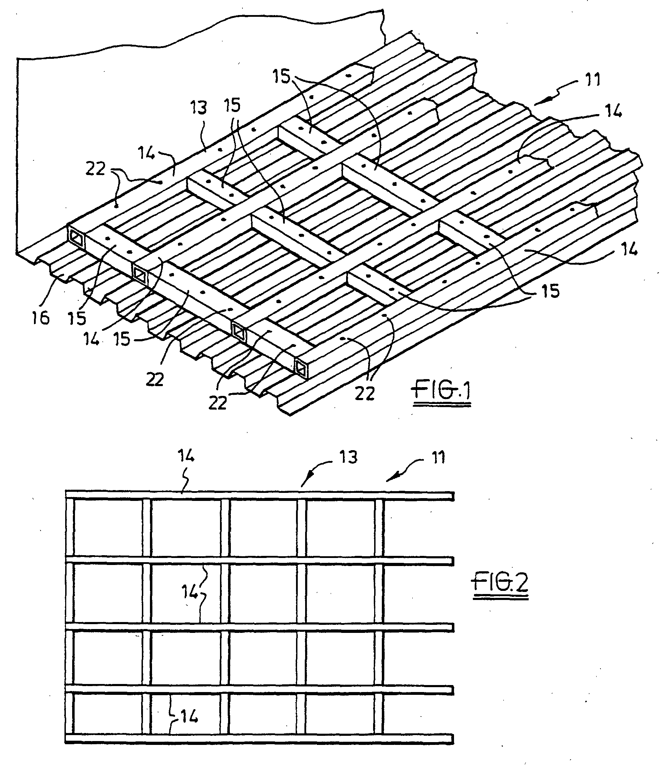

Embodiments of an anchorage arrangement according to the invention will now be described with reference to the accompanying drawings, in which :-
- Figure 1: is a perspective view of part of a framework of an anchorage arrangement attached to a vehicle floor;
- Figure 2: is a plan view of an anchorage arrangement;
- Figure 3: is a side elevation of a seat mounted on an anchoring arrangement;
- and Figure 4: is a front elevation of the seat illustrated in Figure 3, so mounted.

The drawings illustrate anchorage arrangements 11 for vehicular seating 12 comprising a framework 13 of longerons 14 secured - by welding - to transversely extending members 15, said framework being secured to the vehicle floor 16 and the longerons 14 affording forward (17) and rearward (18) anchoring points for forward (19) and rearward (21) base member fastening points of seating 12, the longerons 14 extending forwardly of the forward anchorage points 17 of the seating 12.

The longerons 14 and the transverse members 15 are of rectangular section steel tube stock, typically 30 mm x 50 mm in 3 mm thick steel, although 90 x 50 x 3 could be used instead, giving extra strength and rigidity.

The framework 13 may comprise a single frame extending over the entire floor of a vehicle or substantially so, or it may be made in smaller sections to cover only a part of the floor if limited seating is required. In any event, the framework 13 is capable of prefabrication and is easily installed in and removed from a vehicle.

While, in the drawings, the longerons have been shown as continuous while the transverse members are in short sections, it could be that the transverse members are continuous, the longerons being sectioned. Or a framework could be made in which some of the longerons are continuous and some of the transverse members are continuous.

The framework 13 is bolted to the floor 16, bolts 22 being positioned where the structure of the floor permits. A prefabricated framework 13 intended for a specific make and model of vehicle can be pre-drilled in suitable places for further ease of installation. For a retro-fit, the vehicle floor 16 would need to be drilled - the framework 13 itself could be used to mark the drilling points or a template supplied. Fixing is by any convenient method which will give firm anchorage that will not work loose.

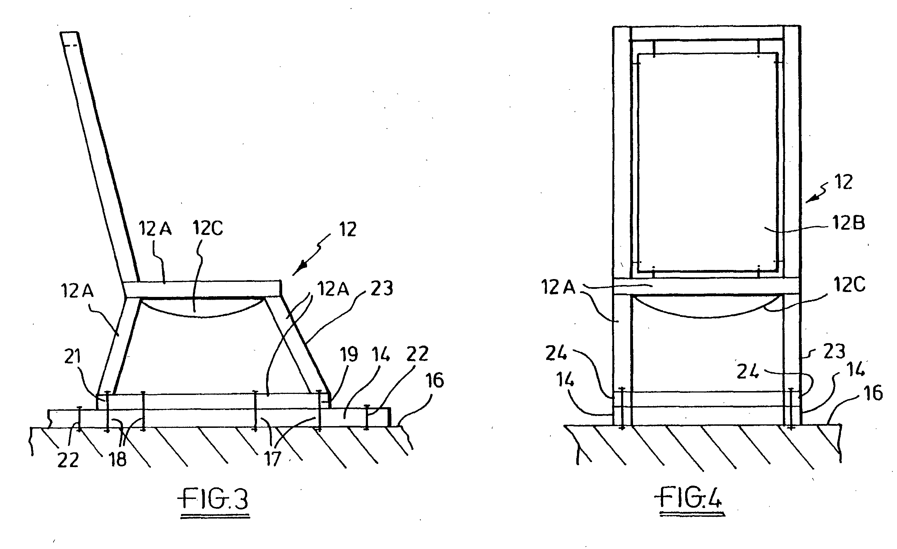

The seating 12, illustrated in Figures 3 and 4, has base member 23 fastening points 24 either side of a seat, adapted for bolting to the longerons 14, as by pre-drilled holes mating with pre-drilled holes in the longerons 14.

Ideally, the seating 12 comprises rigid base frames 12A designed to test when fixed (as by the bolts normallly used for installation in a vehicle) to a rigid support (i.e. the framework or a support simulating the framework) to a 10 g head-on collision. Likewise, the seats and the framework, in combination, can be designed, constructed and assembled to test when installed in a vehicle to a 10 g head-on collision. Preferably, and to meet some requirements, they will test to a 20 g head-on collision.

A seat back support 12B and seat pan 12C can be upholstered or fitted with cushioning in the usual way.

The seats provide further appropriate anchorage (not illustrated) for passenger restraint means, typically seat belts, which may be of the lap diagonal type.

Generally, the seat anchorage arrangement described and illustrated, together with the stronger seating, provides for substantially improved passenger safety. This is achieved together with enhanced rigidity of the vehicle due to the presence of the rigidifying framework The framework is easily installed and removed for altering the vehicle's purpose, and there is no limitation on the flexibility of the vehicle as regards different seating and load-carrying arrangements.

The arrangements are also useful on larger vehicles such as coaches.

While the arrangements have been described and illustrated in terms of forward-facing seating, it is also possible to have rearwardly-facing seating, the forward extension of the longerons with respect to the seating being considered to be in the forward direction of the vehicle, regardless of the direction the seats face.

While, also, the arrangements have been described as a retro-fit, it would clearly be possible to incorporate a framework as described in a vehicle on original equipment.

## Claims

1. An anchorage arrangement for vehicular seating (12) which arrangement comprises:
a framework (13) *which overlays* and *is* fixedly secured to the vehicle floor, said framework (13) *having* longerons (14) secured to transversely extending members (15),
a plurality of seats (12) secured to the framework (13), each seat having forward and rearward base member portions, and forward and rearward fastening points (19, 21, 24) associated with each base member portion *on either side* of *the seats (12),*
whereby the longerons (14) afford forward (17) and rearward (18) anchorage points for the fastening points (19, 21, 24) of each base member and
the longerons (14) extend forwardly of the forward fastening points (17) of each seat (12).

2. An arrangement as claimed in claim 1, **characterised in that** the longerons (14) and transverse members (15) are welded together.

3. An arrangement as claimed in claim 1 or claim 2, **characterised in that** at least the longerons (14) are of rectangular section tube stock.

4. An arrangement as claimed in any preceding claim **characterised in that** the framework comprises steel or a material of like strength and rigidity.

5. An arrangement as claimed in any preceding claim **characterised in that** the framework (13) is bolted to the vehicle floor (16).

6. An arrangement as claimed in any preceding claim **characterised in that** each seat (12) has base member fastening points (24) either side thereof, adapted for bolting to the longerons (14).

7. An arrangement as claimed in any preceding claim **characterised in that** each seat comprises a rigid base frame (12A) designed to test when fixed to a rigid support to a 10 g head-on collision.

8. An arrangement as claimed in any preceding claim: **characterised in that** each seat (12) and framework (12A) is designed, constructed and assembled to test when installed in a vehicle to a 10 g head-on collision.

9. An arrangement as claimed in any preceding claim **characterised in that** each seat comprises passenger restraint means.

10. An arrangement as claimed in claim 9 **characterised in that** said restraint means comprises lap diagonal seat belts secured to the seat base.

11. An arrangement as claimed in any preceding claim **characterised in that** the framework is made in smaller sections to cover only part of the floor.

## Patentansprüche

1. Verankerungseinrichtung für Fahrzeugsitze (12), die aufweist:
ein Rahmenwerk (13), das auf dem Fahrzeugboden aufliegt und mit diesem fest verbunden ist, wobei dieses Rahmenwerk (13) Längsträger (14) aufweist, die gegenüber quer zu diesen verlaufenden Trägergliedern (15) gesichert sind,
eine Mehrzahl von gegenüber dem Rahmenwerk (13) gesicherten Sitzen (12), von denen jeder Sitz ein vorderes und ein hinteres Basisgliedteil sowie vordere und hintere Befestigungspunkte (19,21,24) in deren Zuordnung zu jedem Basisgliedteil auf jeder Seite der Sitze (12) aufweist,
wobei die Längsträger (14):
vordere (17 und hintere (18) Verankerungspunkte für die Befestigungspunkte (19,21,24) jedes Basisgliedes (23) bieten und
sich von den vorderen Befestigungspunkten (17) jedes Sitzes nach vorn erstrecken.

2. Einrichtung wie in Anspruch 1 beansprucht,
**dadurch gekennzeichnet,**
**dass** die Längsträger (14) und Querglieder (15) miteinander verschweißt sind.

3. Einrichtung wie in Anspruch 1 oder Anspruch 2 beansprucht,
**dadurch gekennzeichnet,**
**dass** zumindest die Längsträger (14) aus rechteckigem Rohrprofilmaterial bestehen.

4. Einrichtung wie in jedem beliebigen der vorhergehenden Ansprüche beansprucht,
**dadurch gekennzeichnet,**
**dass** das Rahmenwerk aus Stahl oder einem Material vergleichbarer Festigkeit und Steifigkeit besteht.

5. Einrichtung wie in jedem beliebigen der vorhergehenden Ansprüche beansprucht,
**dadurch gekennzeichnet,**
**dass** das Rahmenwerk (13) auf dem Fahrzeugboden (16) mit Bolzen befestigt ist.

6. Einrichtung wie in jedem beliebigen der vorhergehenden Ansprüche beansprucht,
**dadurch gekennzeichnet,**
**dass** jeder Sitz (12) Basisgliederbefestigungspunkte (24) auf jeder seiner Seiten aufweist, die dazu bestimmt sind, mit den Längsträgern (14) durch Bolzen verbunden zu werden.

7. Einrichtung wie in jedem beliebigen der vorhergehenden Ansprüche beansprucht,
**dadurch gekennzeichnet,**
**dass** jeder Sitz einen steifen Grundrahmen (12A) aufweist, der so ausgelegt ist, dass er bei Befestigung auf einem starren Träger einer Belastung von 10g bei einem Frontalzusammenstoß standhält.

8. Einrichtung wie in jedem beliebigen der vorhergehenden Ansprüche beansprucht,
**dadurch gekennzeichnet,**
**dass** jeder Sitz (12) und das Rahmenwerk (12A) so ausgelegt, gebaut und eingebaut sind, dass sie nach Einbau in ein Fahrzeug bei einem Frontalzusammenstoß einer Belastung von 10g standhalten.

9. Einrichtung wie in jedem beliebigen der vorhergehenden Ansprüche beansprucht,
**dadurch gekennzeichnet,**
**dass** jeder Sitz ein Benutzerzurückhaltemittel aufweist.

10. Einrichtung wie in Anspruch 9 beansprucht,
**dadurch gekennzeichnet,**
**dass** das Benutzerzurückhaltemittel diagonal übereinander hinweggeführte Sitzgurte in deren Befestigung an der Sitzbasis aufweist.

11. Einrichtung wie in jedem beliebigen der vorhergehenden Ansprüche beansprucht,
**dadurch gekennzeichnet,**
**dass** das Rahmenwerk in kleineren Abschnitten hergestellt ist, um nur einen Teil des Fußbodens zu überdecken.

## Revendications

1. Un agencement de fixation pour siège de véhicule (12), lequel agencement comporte :
une ossature (13) qui recouvre le plancher (16) du véhicule et y est assujettie, l'ossature (13) ayant des longerons (14) assujettis à des éléments (15) s'étendant transversalement,
une pluralité de sièges (12) assujettis à l'ossature, comprenant chacun des parties d'éléments de piétement avant et arrière, des points de fixation avant et arrière (19, 21, 24) associés à chaque partie d'élément de piétement de chaque côté du siège (12),
De sorte que les longerons (14) : donnent des points d'ancrage avant (17) et arrière (18) pour les points de fixation (19, 21, 24) de chaque élément de piétement (23) ; et
- les longerons (14) s'étendent vers l'avant des points d'ancrage avant (17) de chaque siège (12).

2. Un agencement tel que revendiqué dans la revendication 1, **caractérisé en ce que** les longerons (14) et les éléments transversaux (15) sont soudés ensembles.

3. Un agencement tel que revendiqué dans la revendication 1 ou la revendication 2, **caractérisé en ce qu'**au moins les longerons (14) sont en tube de section rectangulaire.

4. Un agencement tel que revendiqué dans l'une quelconque des revendications précédentes, **caractérisé en ce que** l'ossature est constituée en acier ou en une matière de résistance et de rigidité analoque.

5. Un agencement tel que revendiqué dans l'une quelconque des revendications précédentes, **caractérisé en ce que** l'ossature (13) est boulonnée sur le plancher (16) du véhicule.

6. Un agencement tel que revendiqué dans l'une quelconque des revendications précédentes, **caractérisé en ce que** chaque siège (12) présente sur chacun de ses côtés des points (24) de fixation des éléments de piétement, agencés pour le boulonnage sur les longerons (14).

7. Un agencement tel que revendiqué dans l'une quelconque des revendications précédentes, **caractérisé en ce que** chaque siège comporte un bâti rigide de piétement (12A) conçu pour résister à une collision avant de 10 g lorsqu'il est fixé à un support rigide.

8. Un agencement tel que revendiqué dans l'une quelconque des revendications précédentes, **caractérisé en ce que** chaque siège (12) et l'ossature (12A) sont conçus, construits et assemblés pour résister à une collision avant de 10g lorsqu'ils sont installés dans un véhicule.

9. Un agencement tel que revendiqué dans l'une quelconque des revendications précédentes, **caractérisé en ce que** chaque siège comporte des moyens de retenue du passager.

10. Un agencement tel que revendiqué dans la revendication 9, **caractérisé en ce que** lesdits moyens de retenue comportent des sangles diagonales de siège en boucle assujetties au piétement du siège.

11. Un agencement tel que revendiqué dans l'une quelconque des revendications précédentes, **caractérisé en ce que** l'ossature est constitué en sections assez petites pour couvrir une partie seulement du plancher.
